Europäisches Patentamt

European Patent Office

Office européen des brevets

(11) Veröffentlichungsnummer: **0 329 646**
**A2**

(12) # EUROPÄISCHE PATENTANMELDUNG

(21) Anmeldenummer: **89890043.6**

(22) Anmeldetag: **17.02.89**

(51) Int. Cl.4: **A 61 C 5/06**

(30) Priorität: **18.02.88 AT 393/88**

(43) Veröffentlichungstag der Anmeldung:
**23.08.89 Patentblatt 89/34**

(84) Benannte Vertragsstaaten:
**BE CH DE ES FR GB GR IT LI LU NL SE**

(71) Anmelder: **Kanotscher, Alexander**
**Högenauerstrasse 3**
**A-5280 Braunau am Inn (AT)**

(72) Erfinder: **Kanotscher, Alexander**
**Högenauerstrasse 3**
**A-5280 Braunau am Inn (AT)**

(74) Vertreter: **Müllner, Erwin, Dr. et al**
**Patentanwälte Dr. Erwin Müllner Dipl.-Ing. Werner**
**Katschinka Weihburggasse 9/24**
**A-1010 Wien (AT)**

(54) **Mischtelleranordnung.**

(57) Eine Mischtelleranordnung für die Abmischung von Formmassen für den Dentalbereich umfaßt eine Wanne (2) und eine diese deckelartig abschließende Muldenplatte (1). Die Mulden (3) haben Öffnungen (5) gegen die Wanne (2), die im wesentlichen mit einer Matte aus einem saugfähigen Material (6) gefüllt ist. Über eine Leitung (7) steht die Wanne (2) mit einem Flüssigkeitsbehälter (4) in Verbindung, dessen Flüssigkeitsniveau höher liegt als die Ebene der Muldenplatte (1). Dadurch wird Flüssigkeit in das saugfähige Material (6) und durch die Öffnungen (5) in die Mulden (3) gedrückt. Das Ausmaß der Befeuchtung der Mulden (3) ist mittels eines Durchflußreglers (10) einstellbar.

Fig. 1

EP 0 329 646 A2

**Beschreibung**

## Mischtelleranordnung

Die Erfindung betrifft eine Mischtelleranordnung für Formmassen für den Dentalbereich, die eine Wanne und eine diese deckelähnlich abschließende Muldenplatte umfaßt, deren Mulden Öffnungen zum Durchtritt von angesaugter Flüssigkeit zum Feuchthalten der angeführten Formmassen aufweist.

Die meist keramischen Massen, welche in der Dentaltechnik Verwendung finden, werden nach verschiedenen Kriterien, wie etwa Farbe, um nur eines zu nennen, gemischt. Dazu werden Mischtelleranordnungen verwendet, die so beschaffen sind, daß in den einzelnen Mulden für eine weitgehend gleichbleibende Feuchtigkeitszufuhr gesorgt ist. Auf diese Weise wird ein frühzeitiges Austrocknen der Mischung verhindert. Wesentlich dabei ist, daß eine Befeuchtung von unten erfolgt.

Bei einer bekannten Ausführungsform wird eine poröse, saugfähige Muldenplatte verwendet, die in einem Wasserbad in einer Wanne gelagert ist. Der Wasserspiegel muß so eingestellt werden, daß die Unterschicht der porösen Muldenplatte ständig benetzt wird. Das Einstellen erfolgt durch Nachgießen von Wasser. Dieser Vorgang ist zeitaufwendig und muß exakt durchgeführt werden, weil ein Überschreiten des Sollstandes zu einem Überschwemmen der Mulden und damit zu einer Zerstörung der Mischung und ein Unterschreiten schlagartig zu einer Unterbrechung der Befeuchtung führt.

Eine andere Mischtelleranordnung geht von einem reichlichen Wasserreservoir in einer Wanne unterhalb einer Muldenplatte aus. Es sind einzelne Dochte vorgesehen, die das Wasser aus dem Reservoir durch Löcher in den Mulden hindurchsaugen und dadurch eine Befeuchtung der Mulden und der in diesen vorgesehenen Mischungen bewirken. Abgesehen davon, daß auch bei dieser Ausführung der Pegelstand der Flüssigkeit genau eingehalten werden muß um eine konstante und gleichmäßige Befeuchtung zu gewährleisten, bringt der unmittelbar mit der Arbeitsplatte verbundene Wasserbehälter Nachteile mit sich. Bei Stößen erfolgt eine Wellenbildung, die nur langsam zur Ruhe kommt und ein exaktes Arbeiten verhindert. Das Wasser kann darüber hinaus auch leicht verschüttet werden.

Die Erfindung zielt darauf ab, eine Mischtelleranordnung der eingangs beschriebenen Art zu verbessern. Dies wird dadurch erreicht, daß in der Wanne eine an der Unterseite der Muldenplatte anliegende Matte aus saugfähigem Material, insbesondere aus einem schaumstoffähnlichen Vlies vorgesehen ist, daß ein Flüssigkeitsbehälter, dessen Flüssigkeitsniveau höher liegt als die Ebene der Muldenplatte, über eine Leitung mit der Wanne verbunden ist und daß in der Leitung ein einstellbarer Durchflußregler, beispielsweise ein frequenzvariabler Tropfer, angeordnet ist. In dem Raum zwischen Wanne und Muldenplatte wird ein hydrostatischer Druck infolge des höher liegenden Flüssigkeitsbehälters wirksam, der durch die Füllung aus saugfähigem Material gedämpft wird und zu einer gleichmäßigen Benetzung der Mulden führt. Die Wanne selbst enthält kein Wasser, sodaß es weder zu einem Aufschaukeln von Wellenbewegungen noch zu einem Verschütten der Flüssigkeit an der Muldenplatte kommen kann. Die Zuflußmenge, die nach einer Erstfüllung sehr gering sein kann, wird nach Bedarf über einen einstellbaren Tropfer, einen Quetschhahn, eine Exzenter oder einen ähnlichen Durchflußregler bestimmt. Es ist zweckmäßig, wenn die Matte aus saugfähigem Material die Wanne im wesentlichen zur Gänze ausfüllt. Dadurch wird sichergestellt, daß an keiner Stelle der Wanne Flüssigkeit unmittelbar austritt. Wenn die Wanne einen verschließbaren Überlauf aufweist, dann kann bei einer Erstfüllung vorerst ein großer Zuflußquerschnitt mittels des Durchflußreglers eingestellt werden, bis Flüssigkeit bei dem Überlauf austritt. Dann wird der Durchfluß zunächst unterbrochen und der Überlauf geschlossen. Besonders vorteilhaft ist es, wenn die Wanne und die Muldenplatte flüssigkeitsdicht miteinander verbunden sind.

Eine spezielle Ausführungsform des Erfindungsgegenstandes ist dadurch gekennzeichnet, daß die mit der Wanne verbundene Muldenplatte in ein Gehäuse schubladenartig einschiebbar ist. Es können mehrere solcher Einheiten übereinander angeordnet werden. Auch können in ein Gehäuse mehrere Wannen mit Muldenplatten, Abdeckplatten oder auch unbewässerte Mischplatten eingeschoben werden. Da die Mulden auf einer Muldenplatte in mehreren Reihen parallel zueinander liegen, kann die Platte je nach Arbeitsfortgang nach und nach herausgezogen bzw. eingeschoben werden. Es ist zweckmäßig, wenn auf dem Gehäuse der Flüssigkeitsbehälter gegebenenfalls zusammen mit Mulden für Rührwerkzeuge, Spatel, Pipetten, Pinsel u.dgl. angeordnet ist. Damit bildet die Mischtelleranordnung eine kompakte Einheit, die genau auf den Bedarf des Technikers zugeschnitten ist. Es ist zweckmäßig, wenn der Flüssigkeitsbehälter Halterungen zum Einhängen von Pipetten, Anrührpipetten, Pinsel od.dgl. in die Flüssigkeit aufweist und wenn der Anschluß der Leitung zur regelbaren Speisung der Wanne in der oberen Hälfte der Behälterwand vorgesehen ist. Werden die Instrumente in die Flüssigkeit hineingehängt, dann erfolgt eine selbsttätige Reinigung und eine Befeuchtung, die für die unmittelbare Einsatzbereitschaft vorteilhaft ist. Da in diesem Fall die Flüssigkeit in zweifacher Weise, nämlich als Reinigungsflüssigkeit und zur Benetzung bzw. Befeuchtung der Mulden verwendet wird, ist es vorteilhaft, den Anschlußstutzen für die Leitung (z.B. einen Kunststoffschlauch) zur Wanne in der oberen Hälfte der Wand des Flüssigkeitsbehälters anzusetzen. Dadurch wird verhindert, daß getrübte Flüssigkeit in die Leitung gelangt. Dennoch ist es vorteilhaft, wenn an den Flüssigkeitsbehälter oder in der Leitung oder im Anschluß an die Wanne ein Filter eingebaut ist.

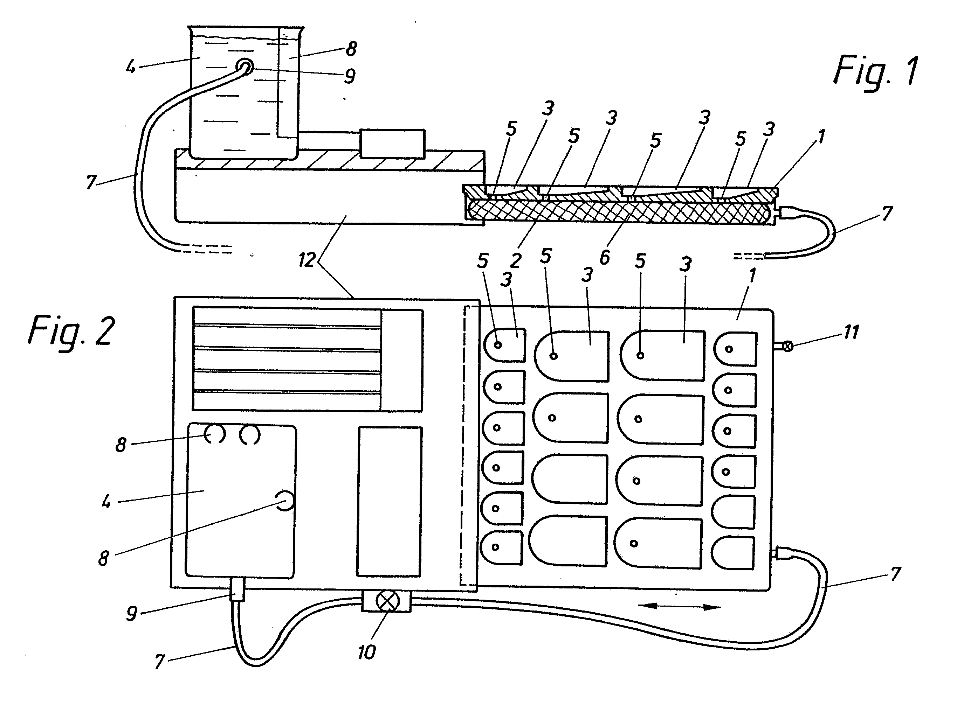

Ein Ausführungsbeispiel des Erfindungsgegenstandes ist in den Zeichnungen schematisch dargestellt. Fig. 1 zeigt einen Querschnitt durch eine Mischtelleranordnung und Fig. 2 eine Draufsicht.

Gemäß Fig. 1 ist eine Muldenplatte 1 deckelartig auf eine Wanne 2 aufgesetzt. Die Muldenplatte 1 besteht aus Keramik, Porzellan oder allenfalls aus Glas. In den Mulden 3 werden die dentalen Formmassen gemischt. Dazu werden verschiedene pulver-oder pastenförmige Grundstoffe unter Beigabe einer Flüssigkeit (z.B. destilliertes Wasser) aus dem Behälter 4 mittels einer Pipette, die gleichzeitig als Rührstab dient, in den Mulden 3 abgemischt. Um ein Eintrocknen der abgemischten Massen zu verhindern, werden die Mulden 3 von unten feucht gehalten. Dazu weisen die Mulden Öffnungen 5 auf, die in die Wanne 2 führen. Die Wanne 2 ist im wesentlichen zur Gänze mit einem saugfähigen Material 6, z.B. einem Vlies, ausgefüllt. In die Wanne 2 führt eine Leitung 7 (ein Kunststoffschlauch), die von dem Flüssigkeitsbehälter 4 gespeist wird. Da in diesem Behälter 4 auch die Pipetten, Spatel, Pinsel u.dgl. in Halterungen 8 so aufbewahrt werden, daß sie in die Flüssigkeit eintauchen, kann es zu einer Trübung der Flüssigkeit im Bodenbereich kommen. Es setzt daher der Stutzen für die Leitung 7 nicht in Bodennähe, sondern in einem höher liegenden Bereich der Behälterwand an.

Wie aus Fig. 2 ersichtlich ist, liegt in der Leitung 7 nicht nur ein Filter 9, sondern auch eine Durchflußregler 10. Es kann die der Wanne 2 zugeführte Flüssigkeitsmenge geregelt werden. Bei Inbetriebnahme der Mischtelleranordnung wird der Durchflußregler 10 so lange offen gehalten, bis die Flüssigkeit beim Überlauf 11 austritt. Der Überlauf 11 wird sodann verschlossen. Das saugfähige Material 6 nimmt die zugeführte Flüssigkeit vollständig auf. Da der von der Wanne 2 und der Muldenplatte 1 begrenzte Raum randseitig vollständig abgeschlossen ist, wird die Flüssigkeit infolge des Drucks der Flüssigkeitssäule (hoch stehender Behälter) langsam und mittels des Durchflußreglers 10 kontrollierbar durch die Öffnungen 5 in die Mulden 3 hinausgedrückt. Auf diese Wiese ist eine permanente Befeuchtung der abgemischten Massen gewährleistet.

Fig. 2 zeigt, daß nicht alle Mulden zwingend mit einer Öffnung versehen sein müssen. Ferner ist den Figuren zu entnehmen, daß der aus Muldenplatte 1 und Wanne bestehende Mischteller in ein Gehäuse 12 schubladenartig einschiebbar ist. Das Gehäuse trägt nicht nur den Flüssigkeitsbehälter 4, sondern auch einen Schwamm und weitere Halterungen und Aufnahmen für Geräte, die der Zahntechniker bei siener Arbeit benötigt. In ein Gehäuse 13 können auch mehrere Mischteller übereinander eingeschoben werden. Dazu sind individuelle Führungen vorgesehen. Es können aber auch mehrere Gehäuse aufeinander gestapelt werden.

Ergänzend sei noch darauf hingewiesen, daß den Mulden 3 der Muldenplatte 1 Bezeichnungen,z.B. eine permanente unter der Glasur der Platte 1 befindliche Numerierung zugeordnet ist. Randseitig besteht auf der Platte 1 die Möglichkeit, Hinweise auf den konkreten Mischungsinhalt oder die Flaschennummer der Mischungen anzubringen. Es kann auch noch eine Schablone verwendet werden, die über die Muldenplatte 1 gelegt wird und die mit den Mulden 3 etwa korrespondierende Ausnehmungen aufweist. Die Schablone trägt eine Beschriftung, welches die individuellen Mischungsinhalte betrifft.

**Patentansprüche**

1. Mischtelleranordnung für Formmassen für den Dentalbereich, die eine Wanne und eine diese deckelähnlich abschließende Muldenplatte umfaßt, deren Mulden Öffnungen zum Durchtritt von angesaugter Flüssigkeit zum Feuchthalten der angerührten Formmassen aufweist, dadurch gekennzeichnet, daß in der Wanne (2) eine an der Unterseite der Muldenplatte (1) anliegende Matte aus saugfähigem Material (6), insbesondere aus einem schaumstoffähnlichen Vlies vorgesehen ist, daß ein Flüssigkeitsbehälter (4), dessen Flüssigkeitsniveau höher liegt als die Ebene der Muldenplatte (1), über eine Leitung (7) mit der Wanne (2) verbunden ist und daß in der Leitung (7) ein einstellbarer Durchflußregler (10), beispielsweise ein frequenzvariabler Tropfer, angeordnet ist.

2. Mischtelleranordnung nach Anspruch 1, dadurch gekennzeichnet, daß die Matte aus saugfähigem Material (6) die Wanne (2) im wesentlichen zur Gänze ausfüllt.

3. Mischtelleranordnung nach den Ansprüchen 1 oder 2, dadurch gekennzeichnet, daß die Wanne (2) einen verschließbaren Überlauf (11) aufweist.

4. Mischtelleranotdnung nach einem der Ansprüche 1 bis 3, dadurch gekennzeichnet, daß die Wanne (2) und Muldenplatte (1) randseitig flüssigkeitsdicht miteinander verbunden sind.

5. Mischtelleranotdnung nach einem der Ansprüche 1 bis 4, dadurch gekennzeichnet, daß die mit der Wanne (2) verbundene Muldenplatte (1) in eine Gehäuse (12) ladenartig einschiebbar ist.

6. Mischtelleranordnung nach Anspruch 5, dadurch gekennzeichnet, daß auf dem Gehäuse (12) der Flüssigkeitsbehälter (4) gegebenenfalls zusammen mit Mulden für Rührwerkzeuge, Spatel, Pipetten, Pinsel u.dgl. angeordnet ist.

7. Mischtelleranordnung nach einem der Ansprüche 1 bis 6, dadurch gekennzeichnet, daß der Flüssigkeitsbehälter (4) Halterungen (8) zum Einhängen von Pipetten, Anrührpipetten, Pinsel od.dgl. in die Flüssigkeit aufweist und daß der Anschluß der Leitung (7) zur regelbaren Speisung der Wanne (2) in der oberen Hälfte der Behälterwand vorgesehen ist.

8. Mischtelleranordnung nach einem der Ansprüche 1 bis 7, dadurch gekennzeichnet, daß an dem Flüssigkeitsbehälter (4) oder in der Leitung (7) oder im Anschluß an die Wanne (2) ein Filter (8) eingebaut ist.

Fig. 1

Fig. 2

EP 0 329 646 A2